# FASCICULE DE BREVET EUROPEEN

(11) **EP 1 383 996 B1**
(45) Date de publication et mention de la délivrance du brevet: **16.08.2006**
(21) Numéro de dépôt: 02735311.9
(22) Date de dépôt: 26.04.2002
(51) Int. Cl.: F02D 9/16

(54) **DISPOSITIF D'OBTURATION DE CONDUITS D'ADMISSION D'AIR D'UN MOTEUR**
VERSCHLUSSVORRICHTUNG FÜR LUFTEINLASSLEITUNGEN EINES MOTORS
DEVICE FOR CLOSING AN ENGINE AIR INTAKE CONDUITS

(30) Priorité: 02.05.2001 FR 0106050
(43) Date de publication de la demande: 28.01.2004
(73) Titulaire: MANN+HUMMEL GmbH, 71638 Ludwigsburg (DE)
(72) Inventeur: LANNOY, Wolfgang, B-1300 Bruxelles (BE); BRASSEUR, Philippe, B-1050 Bruxelles (BE)
(74) Mandataire: Voth, Gerhard
(86) Numéro de dépôt international: PCT/EP2002/004675
(87) Numéro de publication internationale: WO 2002/088533

(56) Documents cités:
- EP-A- 0 480 393
- EP-A- 0 529 676
- EP-A- 1 083 310
- WO-A-99/39091
- US-A- 5 487 365

## Description

La présente invention concerne un dispositif d'obturation de conduits d'admission d'air d'un moteur à combustion interne multicylindre. Plus particulièrement, elle concerne un dispositif d'obturation permettant d'agir sur le débit gazeux circulant entre le collecteur d'admission du moteur (qui est formé d'une partie commune ou plenum et d'un répartiteur constitué de tubulures d'admission) et ses différents cylindres.

Dans ce type de moteurs, on cherche à optimiser la combustion du carburant dans les cylindres en améliorant le mélange du combustible et de l'air utilisé comme comburant pendant la phase d'admission. Dans les moteurs à injection de carburant, le problème est crucial aux bas régimes de fonctionnement, étant donné l'absence de système à carburateur qui réalise un aérosol de carburant dans l'air d'admission. Le problème est généralement résolu en provoquant de la turbulence dans les débits gazeux qui sont introduits dans chaque cylindre du moteur. Une technique souvent utilisée est celle de l'effet "swirl" ou encore de la rotation des gaz dès leur entrée dans le cylindre afin de créer un mouvement tourbillonnaire d'axe parallèle à celui du cylindre, propice à l'amélioration du mélange air - carburant. Pour y parvenir, on peut par exemple, à bas régime, obturer une tubulure d'admission sur deux dans le cas des moteurs à deux tubulures d'admission par cylindre. Une autre technique consiste à générer un effet "tumble", c'est-à-dire un mouvement tourbillonnaire dont l'axe est perpendiculaire à celui du cylindre. Ce genre d'effet peut être obtenu en prévoyant un conduit culasse séparé en deux parties par une paroi et en obturant une des deux parties de ce conduit.

Des dispositifs capables de générer un effet swirl ou un effet tumble d'intensité variable selon la charge et le régime du moteur, et qui ne perturbent pas l'écoulement de l'air à haut régime (c.à.d. en position ouverte) ont été mis au point. Ainsi, la demande de brevet EP 1 083 310 divulgue un système d'obturation pour moteurs comportant plus d'une soupape d'admission par cylindre qui est réalisé au moyen d'un double collecteur (un pour chaque série de tubulures d'admission) dont une partie (celle relative à une série de tubulures d'admission) est équipée d'un boîtier comprenant un boisseau permettant l'obturation des tubulures. Le boisseau est logé dans un alésage réalisé dans le boîtier et il comporte des éléments obturateurs d'une géométrie adaptée pour que en position ouverte, l'écoulement de l'air ne soit pas perturbé. Un tel boisseau présente toutefois l'inconvénient d'une géométrie compliquée et d'une rigidité faible, qui pourrait mener en service, à des problèmes de vibration. En outre, un système à double collecteur implique le montage d'une pièce supplémentaire, avec les frais de main d'oeuvre et les risques de défaut d'étanchéité associés. Enfin, le type de boisseau décrit dans cette demande ne permet pas l'obturation partielle des conduits d'admission sans perturber l'écoulement de l'air dans la partie non obturée

Pour remédier à ces défauts, tout en gardant l'avantage d'un écoulement non perturbé en position ouverte, l'invention a pour but de fournir un dispositif d'obturation de géométrie simple, tout en étant rigide, et qui est apte à obturer entièrement ou partiellement des conduits d'admission. En outre, ce dispositif peut être intégré au répartiteur d'air et constituer ainsi une seule pièce d'équipement qui peut être montée en une seule opération par le constructeur du moteur sur la culasse de celui-ci.

A cet effet, l'invention concerne un dispositif d'obturation de conduits d'admission d'air d'un moteur à combustion interne multicylindre, comprenant un boisseau muni de plusieurs éléments obturateurs ainsi qu'un fourreau muni de part et d'autre d'ouvertures latérales pour le passage de l'air et présentant un évidement longitudinal dans lequel le boisseau est inséré et peut tourner autour d'un axe de rotation, selon lequel les éléments obturateurs comportent une plaque ayant une surface fonctionnelle substantiellement plane qui, lorsque le dispositif est en position ouverte, est alignée avec le bord inférieur ou supérieur d'une ouverture correspondante du fourreau et selon lequel l'axe de rotation traverse la plaque d'au moins un élément obturateur.

Le dispositif d'obturation selon la présente invention permet de fermer à volonté, totalement ou partiellement, au moins une partie des conduits d'admission d'air d'un moteur à combustion interne. Ces conduits sont les conduits présents dans chaque moteur thermique, aboutissant à la partie supérieure de chaque cylindre à l'endroit d'une soupape d'admission et provenant d'un répartiteur chargé de répartir l'air aspiré entre tous les cylindres.

Par moteur thermique, on entend désigner ici un moteur à combustion interne ou à explosion comprenant au moins deux cylindres dans chacun desquels coulisse un piston animé d'un mouvement alternatif qui est transformé en mouvement de rotation au moyen d'un système bielle-manivelle et dans lequel l'énergie chimique de combustion d'un carburant est transformée en énergie cinétique de rotation d'un arbre.

Le dispositif selon l'invention est généralement situé entre le répartiteur d'air et la culasse, c'est-à-dire entre la pièce qui répartit entre les différents cylindres l'air utilisé comme comburant par le moteur et la culasse de celui-ci.

Selon l'invention, le fourreau comporte de part et d'autre des ouvertures latérales pour le passage de l'air, ainsi qu'un évidement longitudinal pour y loger le boisseau et permettre son mouvement de rotation autour d'un axe. Les ouvertures latérales peuvent être de forme quelconque. Cette forme est généralement adaptée, et le plus souvent identique à la forme des conduits à obturer. De préférence, la forme du conduit à obturer est substantiellement rectangulaire. Toutefois, quelle que soit leur forme, ces conduits présentent avantageusement une découpe dans les coins.

Selon l'invention, les éléments obturateurs comportent une plaque ayant une surface fonctionnelle substantiellement plane qui s'aligne avec le bord inférieur ou le bord supérieur d'une ouverture correspondante du fourreau lorsque le dispositif est en position ouverte, et ce selon que l'on désire obturer les conduits à partir du haut ou du bas (ou seulement la portion inférieure ou supérieure de ceux-ci).. Par « substantiellement plane», on entend qu'au moins 80% de la surface, de préférence au moins 90%, voire au moins 95% de la surface est plane. Il s'agit généralement de la portion centrale de la surface, les bords pouvant être munis d'une découpe en vue de_perturber le moins possible l'écoulement. La forme et la taille de ces éléments, ainsi que l'emplacement de leur axe de rotation par rapport aux tubulures à obturer, sont adaptés à la forme et à la taille des tubulures à obturer, ainsi qu'à la forme interne du fourreau.

Afin d'obtenir un boisseau d'une rigidité suffisante pour résister aux efforts mécaniques en service et aux vibrations sans devoir augmenter exagérément l'épaisseur des plaques, il est souvent avantageux de munir celles-ci d'une ou de plusieurs nervures du côté opposé à la surface fonctionnelle. Le nombre, la géométrie et la disposition de ces nervures sont adaptés de manière à augmenter au maximum le moment d'inertie en flexion et en torsion de la pièce. De préférence, toutes les plaques sont munies de nervures identiques. Ces nervures sont généralement perpendiculaires à celles-ci. Elles sont souvent comprises dans un plan qui englobe l'axe de rotation. Une seule nervure centrale suffit généralement à obtenir une rigidité en flexion et torsion satisfaisante. La hauteur de cette nervure sera adaptée en fonction de la rigidité désirée, et de l'emplacement disponible dans le boîtier. Dans le cas où les tubulures à obturer sont cylindriques, cette nervure aura de préférence une hauteur substantiellement égale au rayon du conduit à obturer.

Selon l'invention, le dispositif permet l'obturation de plusieurs conduits d'admission d'air et la commande de fermeture est simultanée pour tous les conduits. De préférence, le taux d'obturation réalisé est identique pour chaque conduit correspondant pour chaque cylindre.

Le dispositif selon la présente invention peut être une pièce séparée que l'on vient intercaler entre le collecteur et la culasse du moteur.

Alternativement, et de manière préférée, le dispositif selon la présente invention est intégré au collecteur d'admission. A noter que dans ce cas, si l'architecture le permet, le collecteur peut également intégrer un couvre-culasse, ce qui permet de réduire au maximum le nombre de pièces à monter sur le moteur. De préférence, le fourreau est moulé d'une seule pièce avec le collecteur d'admission.

Afin de maintenir le boisseau en place dans le fourreau tout en permettant sa rotation, ledit boisseau est généralement muni en ses deux extrémités de tourillons de guidage. A une extrémité, le tourillon est relié à une organe d'entraînement actionné par un dispositif adéquat, et à l'autre extrémité, le tourillon est inséré dans un logement qui est soit intégré au fourreau, soit réalisé dans une pièce séparée faisant office de bouchon. Pour diminuer les frottements lors de la rotation du tourillon dans le logement, au moins une de ces pièces (tourillon et/ou logement) peut être constituée au moins en surface, d'un matériau à faible coefficient de frottement. Alternativement, une pièce supplémentaire en un tel matériau peut être insérée entre le tourillon et le logement. Si nécessaire, l'étanchéité vers l'extérieur est améliorée au moyen de joints (de type o-ring ou joints à lèvres par exemple).

Dans le dispositif selon la présente invention, le boisseau peut être entraîné dans son mouvement de rotation autour de son axe par tout moyen connu. Ainsi par exemple, l'axe peut être muni en son bout d'un actionneur pneumatique. En outre, la position angulaire du boisseau peut être mesurée à l'aide de tout dispositif connu, par exemple au moyen d'un potentiomètre.

Les éléments obturateurs peuvent être réalisés en différentes matières ou compositions compatibles avec l'environnement du moteur et en particulier, celui des conduits d'admission d'air. On peut par exemple utiliser des éléments en métal. On peut ainsi utiliser des volets en acier ou en alliage d'aluminium. On peut encore utiliser des éléments obturateurs en matière plastique, par exemple un boisseau à base de résine thermoplastique ou thermodurcissable. Les éléments obturateurs réalisés en matière plastique sont préférés.

Les éléments obturateurs sont reliés entre eux par des éléments de liaison de section circulaire dont l'axe de symétrie coïncide avec l'axe de rotation du boisseau et dont le diamètre extérieur est réalisé à des dimensions et avec une tolérance permettant la rotation du boisseau dans le fourreau. A noter que cette même exigence de dimensions et tolérance existe pour le contour des éléments obturateurs. Selon une variante préférée de la présente invention, ces éléments de liaison sont pourvus d'évidements afin de réduire le poids du boisseau. Avantageusement, ces évidements ont la forme de portions de disques dans un plan perpendiculaire à l'axe de rotation du boisseau.

De manière avantageuse, au moins un de ces éléments de liaison est pourvu d'une bague. Cet élément, dont la fonction est de réduire les bruits produits par les vibrations, est réalisé à partir d'un matériau à faible coefficient de frottement tel que le POM (ou polyoxyméthylène). Selon une variante, la ou les bagues sont constituées de plusieurs pièces assemblées par clippage sur les évidements des éléments de liaison. Dans ce cas, les bagues présentent un diamètre extérieur légèrement supérieur à celui des éléments de liaison. Selon une autre variante, la ou les bagues sont montées à l'intérieur du fourreau, au droit des éléments de liaison.

Les éléments de liaison peuvent être, indépendamment de la nature des éléments obturateurs qu'ils relient, réalisés en des matières ou compositions de natures diverses. Ils peuvent, par exemple être réalisés en métal, comme par exemple en acier ou en métal léger tel que l'aluminium ou un alliage d'aluminium. Ils peuvent aussi avantageusement être réalisé en matière plastique. Comme matière plastique, on peut par exemple utiliser une résine polyamide.

Selon une variante particulièrement préférée de la présente invention, le boisseau (c.à.d . l'assemblage des éléments obturateurs et des éléments de liaison) est réalisé d'une seule pièce, et de préférence par moulage. A cet effet, une matière plastique telle que le polyamide, éventuellement chargée avec une ou des matières particulaires (talc ou billes de verre par exemple) ou fibreuses (fibres de verre ou de carbone par exemple), convient bien. Cette matière plastique peut comprendre un additif permettant de réduire son coefficient de friction (PTFE par exemple) mais pas en des quantités susceptibles de nuire à sa résistance mécanique.

Le dispositif décrit plus haut est particulièrement bien adapté à l'utilisation dans un moteur comprenant plus d'une soupape d'admission par cylindre, et en particulier, aux moteurs ayant deux soupapes d'admission par cylindre et donc également, deux conduits d'admission par cylindre. Les éléments obturateurs peuvent ainsi être conçus et disposés de manière à pouvoir obturer soit entièrement un conduit sur deux, soit partiellement chacun des conduits. Dans le cas d'une obturation partielle des conduits, les conduits d'admission de la culasse sont munis d'une paroi qui les partage en deux parties dont seulement une sera obturée par le dispositif selon la présente invention vient obturer. Dans ce cas, le dispositif selon la présente invention permet, par un dimensionnement adéquat, de ne pas perturber l'écoulement de la partie que l'on ne désire pas obturer, même en position fermée.

Lorsque le dispositif selon la présente invention est destiné à obturer seulement partiellement les conduits d'admission d'air, il est généralement pourvu d'une paroi moulée d'une pièce avec le fourreau et qui prolonge en général une paroi similaire apposée dans les conduits d'admission de la culasse. En effet, le boisseau étant animé d'un mouvement de rotation autour de son axe et la position fermée impliquant un angle non nul des éléments obturateurs par rapport à la paroi inférieure de la tubulure, cette paroi est nécessaire pour effectivement obtenir l'obturation de la partie du conduit visée. Ainsi, selon cette variante de l'invention, le fourreau comprend une paroi interne contre laquelle les éléments obturateurs viennent s'ajuster en position fermée. Dans ce cas, le profil des bords de cette paroi et de l'élément obturateur sont conçus de manière à obtenir un débit de fuite limité et identique pour chaque conduit lorsque le dispositif est en position fermée. A cette fin, on prévoit avantageusement un jeu de 0.1 à 5 mm entre les plaques et les parois dans chaque conduit obturé, une valeur d'environ 0.5 mm convenant bien. De manière préférée, la paroi est perpendiculaire aux ouvertures latérales dans le fourreau.

Le dispositif selon la présente invention convient particulièrement pour obturer partiellement les conduits d'un moteur que l'on désire alimenter de façon totalement séparée en air frais et en gaz d'échappement recyclés.

Lorsque le fourreau du dispositif selon la présente invention est réalisé par moulage en matière plastique, un élément important à prendre en compte est l'obtention de l'évidement longitudinal en son sein. En effet, on utilise généralement un noyau à cette fin, qu'il importe de pouvoir ôter lors du démoulage. Une technique simple, mais coûteuse, est de recourir à un noyau fusible (par exemple à base d'un métal ou d'un alliage à bas point de fusion, tel qu'il est connu de l'homme de l'art). Une autre technique consiste à prévoir un évidement conique. Afin d'obtenir une pièce aisément démoulable, l'angle de la conicité est avantageusement compris entre 0.1 et 1 °. En outre, afin d'obtenir une bonne étanchéité avec le boisseau, on veillera à ce que le boisseau soit également conique, l'axe des deux cônes correspondant avec l'axe de rotation du boisseau lorsque celui-ci est inséré dans le fourreau.

Dans le cas d'un boisseau conique et de l'obturation, partielle des conduits, on veillera à adapter la disposition de l'axe du cône (et donc, de l'axe de rotation) de manière à ce que la longueur de l'écoulement dans la partie de non obturée de ceux-ci soit contante d'un conduit à l'autre, et ce pour des raisons d'homogénéité de remplissage principalement. Dans ce cas donc, la longueur de la paroi d'ajustage (dans une direction perpendiculaire à l'axe de rotation) sera la même dans chaque conduit. Alternativement, la longueur de cette paroi peut être variable d'un conduit à l'autre tout le long du fourreau. Dans ce cas toutefois, la longueur de l'écoulement dans la partie non obturée ne sera pas la même d'un conduit à l'autre, ce qui peut mener à des problèmes de remplissage du moteur.

La présente invention est illustrée de manière non limitative par les figures 1 à 9.

La figure 1 représente une vue éclatée d'un dispositif selon une variante de la présente invention.
Les figures 2 et 3 représentent une vue détaillée du boisseau de ce dispositif, respectivement en perpective et selon une coupe par un plan perpendiculaire aux éléments obturateurs et passant par leur axe de rotation.
Les figures 4 à 6 représentent ce dispositif en position ouverte, respectivement vu de face (figure 4) et en coupe selon les plans marqués C1 (figure 5) et C8 (figure 6) dans la figure 4, les coupes ayant été complétées respectivement à gauche, par une coupe dans la culasse, et à droite, par une coupe dans un collecteur auquel le dispositif obturateur est avantageusement intégré.
Les figures 7 à 9 représentent ce dispositif en position fermée, respectivement vu de face (figure 7) et en coupe selon les plans marqués C1 (figure 8) et C8 (figure 9) dans la figure 7, les coupes ayant été complétées respectivement à gauche, par une coupe dans la culasse, et à droite, par une coupe dans un collecteur auquel le dispositif obturateur est avantageusement intégré.

Dans toutes ces figures, on a utilisé des numéros identiques pour désigner des pièces ou parties de pièces identiques.

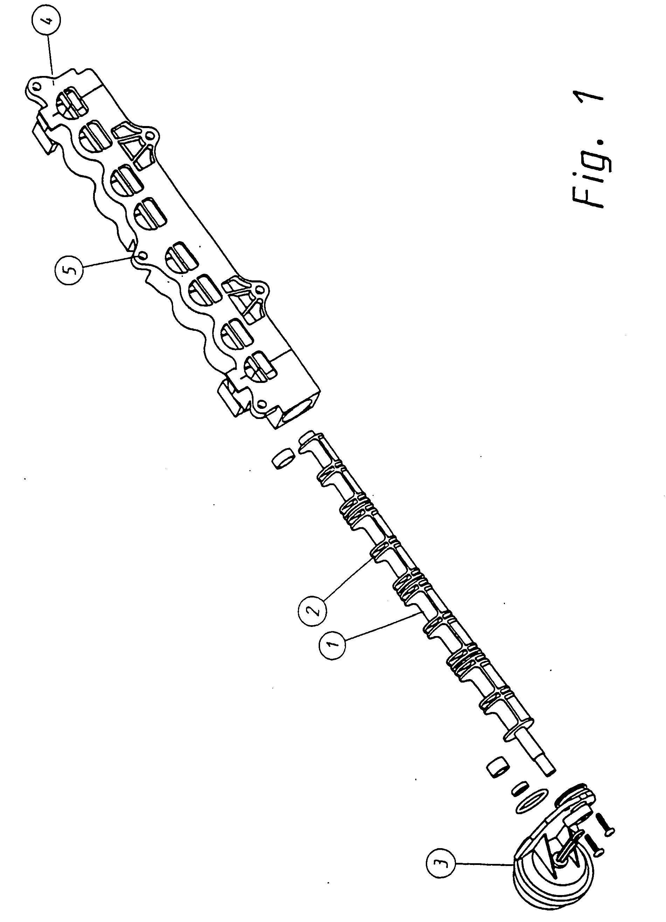

Ainsi, la figure 1 montre un dispositif selon la présente invention comprenant un boisseau muni d'éléments obturateurs (1) et d'éléments de liaison (2). Ce boisseau est actionnable au moyen d'un actionneur pneumatique (3), et il est destiné à être introduit dans un fourreau (4) muni de pattes de fixation (5). Le fourreau est muni d'ouvertures de même taille que le diamètre interne des tubulures à obturer, et qui sont alignées avec celles-ci. Le dispositif illustré est destiné à obturer partiellement (sur leur partie inférieure uniquement) les tubulures d'admission d'un moteur à 4 cylindres ayant deux soupapes d'admission par cylindre. C'est pourquoi il est muni de 4 fois 2 ouvertures.

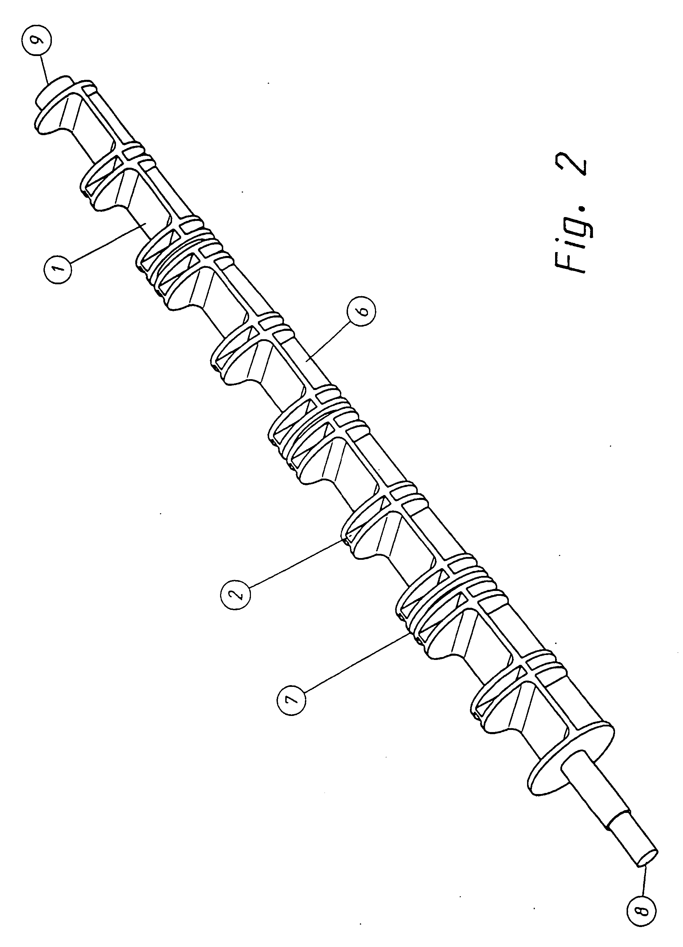

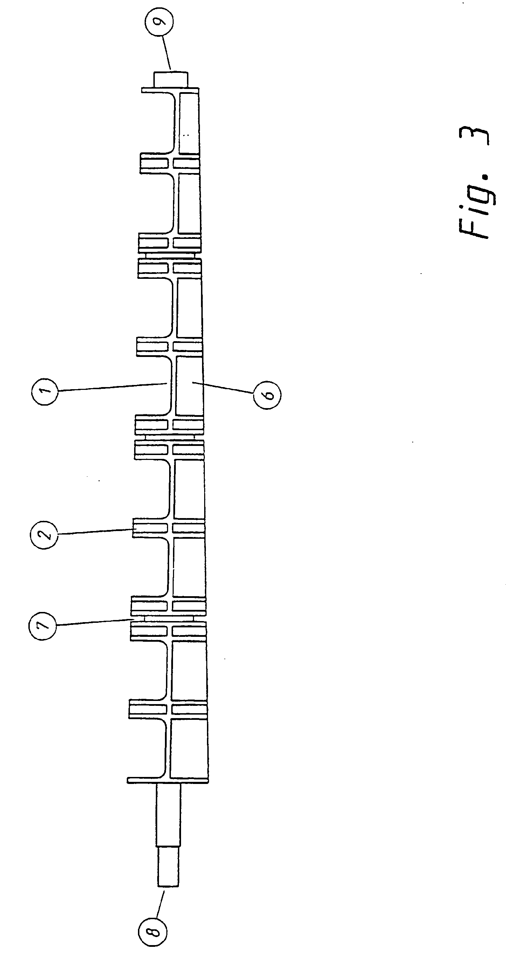

Les figures 2 et 3 montrent les détails du boisseau sous différents angles. On voit ainsi que les éléments obturateurs comprennent des plaques qui sont munies de nervures (6), et que les éléments de liaison sont munis d'évidements dont certains (7) sont prévus pour contenir des éléments anti-vibrations (bagues) tels que décrits précédemment (non représentés). On voit également qu'une extrémité de l'axe de rotation (8) présente une forme adaptée pour être accouplée à l'actionneur (3), et que l'autre extrémité de l'axe de rotation (9) présente une forme adaptée pour être supportée par le fourreau . La figure 3 montre bien que conformément à la présente invention, l'axe de rotation, qui passe par le centre des extrémités (8) et (9), traverse la paroi longitudinale d'au moins un élément obturateur. L'avantage est qu'avec de tels éléments obturateurs, qui sont substantiellement centrés sur l'axe de rotation, le boisseau présente une forme simple, équilibrée, exempte de balourds, qui est facile à mouler d'une seule pièce, par exemple en matière plastique. En outre, un boisseau de cette forme présente un moment d'inertie en flexion et en torsion élevé, ce qui permet de réduire les sollicitations mécaniques et les problèmes de vibrations en service.

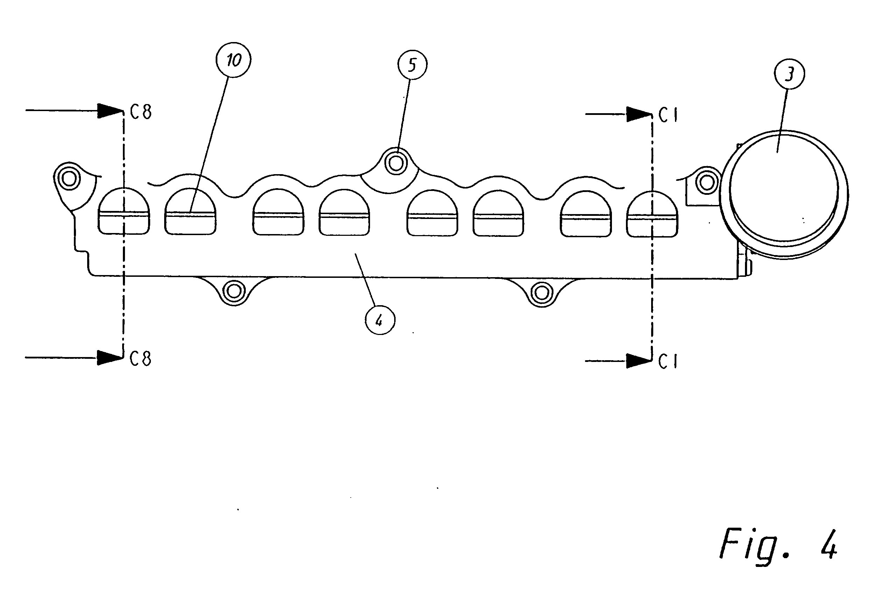

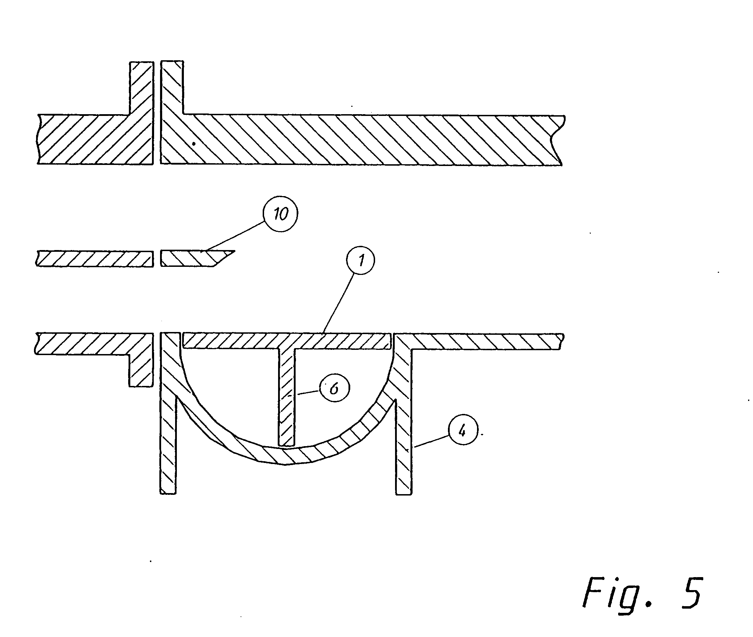

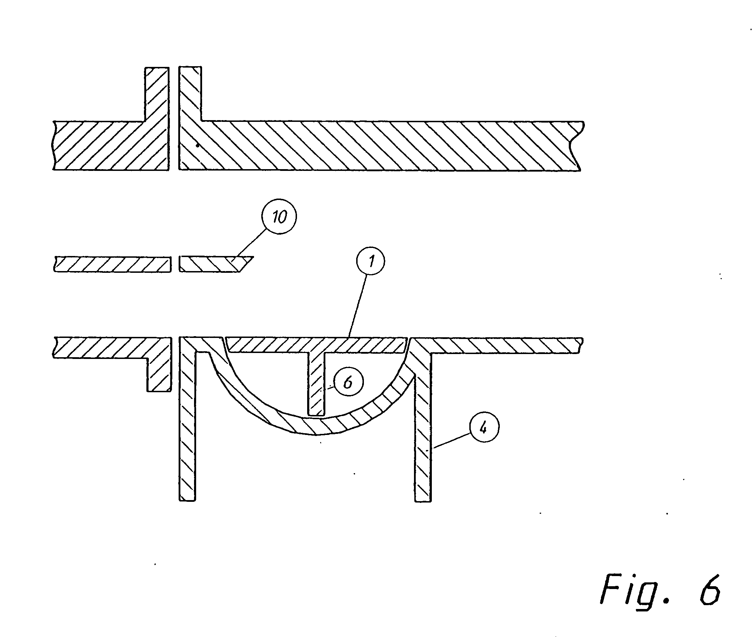

Les figures 4 à 6 montrent que lorsque le dispositif est en position ouverte, les plaques ont leur surface supérieure (qui est substantiellement plane) alignée avec le bord inférieur des ouvertures du fourreau, celui-ci étant aligné avec la paroi inférieure des conduits à obturer. Ainsi, l'écoulement de l'air du collecteur vers la culasse (de droite à gauche sur les figures 5 et 6) n'est pas perturbé.

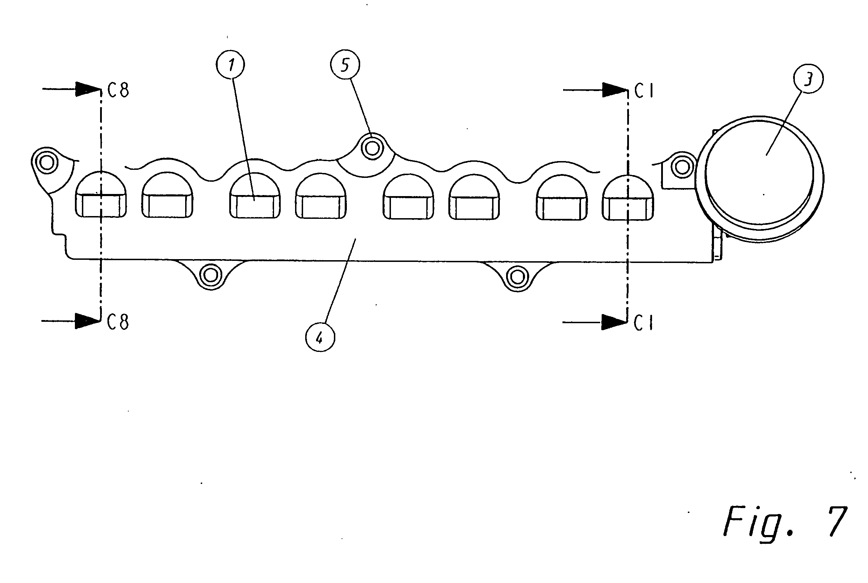

Les figures 7 à 9 montrent que lorsque le dispositif est en position fermée, une paroi (10) est nécessaire pour obtenir l'obturation de la partie inférieure des conduits culasse que l'on désire obturer.

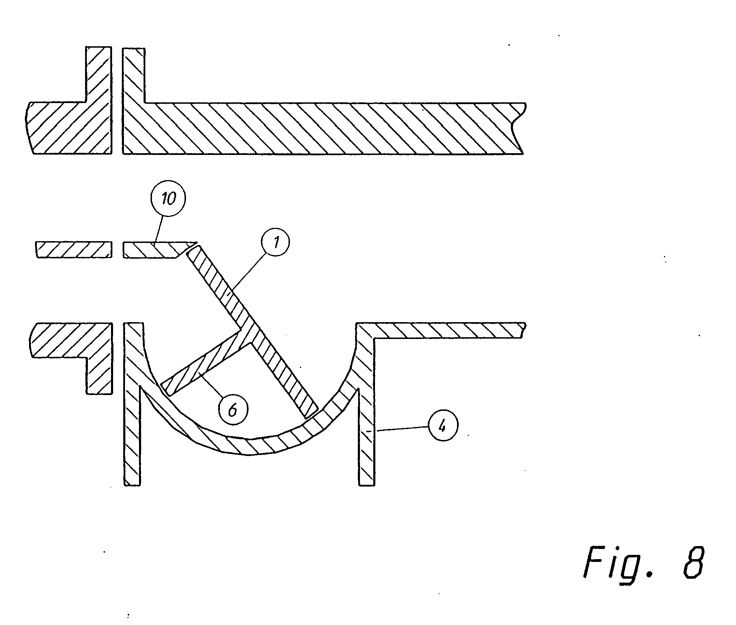

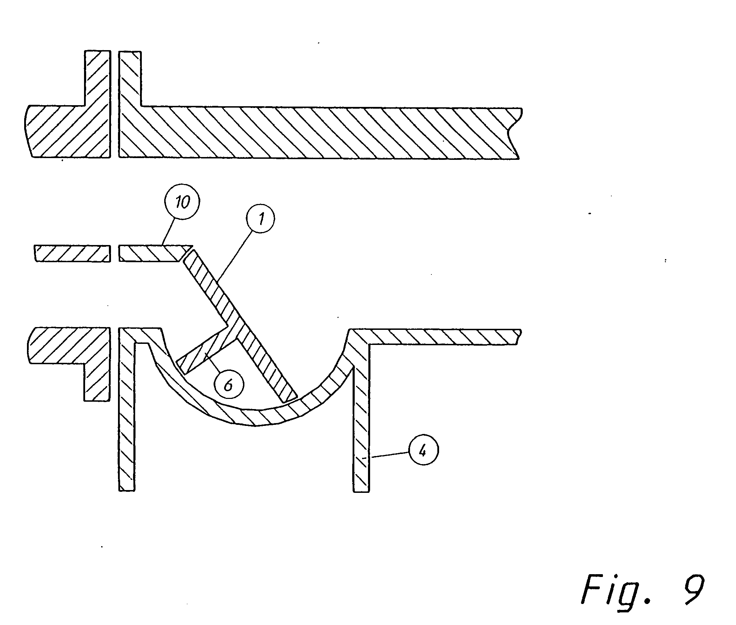

Les figures 4 à 9 montrent également, de manière exagérée, la variante avantageuse selon laquelle à la fois le boisseau et le fourreau sont coniques. En effet, il apparaît clairement que dans les coupes selon les plans C1 (figures 5 et 8), les plaques et l'évidement dans le boisseau sont de plus grande dimension que dans coupes selon les plans C8 (figures 6 et 9).

## Revendications

1. Dispositif d'obturation de conduits d'admission d'air d'un moteur à combustion interne multicylindre, comprenant un boisseau muni de plusieurs éléments obturateurs (1) ainsi qu'un fourreau (4) muni de part et d'autre d'ouvertures latérales pour le passage de l'air et présentant un évidement longitudinal dans lequel le boisseau est inséré et peut tourner autour d'un axe de rotation, selon lequel les éléments obturateurs (1) comportent une plaque ayant une surface fonctionnelle substantiellement plane qui, lorsque le dispositif est en position ouverte, est alignée avec le bord inférieur ou supérieur d'une ouverture correspondante du fourreau et selon lequel l'axe de rotation traverse la plaque d'au moins un élément obturateur.

2. Dispositif selon la revendication 1, dans lequel les plaques des éléments obturateurs sont munies du côté opposé à la surface fonctionnelle d'une ou de plusieurs nervures (6).

3. Dispositif selon l'une quelconque des revendications précédentes, dans lequel les parois longitudinales comprennent une nervure centrale (6) perpendiculaire à celles-ci et située dans un plan qui englobe l'axe de rotation.

4. Dispositif selon l'une quelconque des revendications précédentes, dans lequel le fourreau (4) est intégré à un collecteur d'admission.

5. Dispositif selon l'une quelconque des revendications précédentes, dans lequel le boisseau comprend des éléments de liaison (2) de section circulaire qui relient les éléments obturateurs (1) entre eux, dont l'axe de symétrie coïncide avec l'axe de rotation, et qui sont munis d'évidements.

6. Dispositif selon la revendication 5, dans lequel au moins un évidement (7) est pourvu d'une bague en matériau à faible coefficient de friction.

7. Dispositif selon l'une quelconque des revendications précédentes, dans lequel le boisseau est réalisé d'une seule pièce en matière plastique.

8. Dispositif selon l'une quelconque des revendications précédentes, dans lequel le fourreau comprend une paroi interne (10) contre laquelle les éléments obturateurs viennent s'ajuster en position fermée du dispositif.

9. Dispositif selon la revendication 8, dans lequel le boisseau est conique et son axe de rotation est disposé de manière à obtenir un jeu constant entre les éléments obturateurs (1) et la paroi (10) contre laquelle ils viennent buter pour obturer les (parties de) conduits d'admissions.

10. Utilisation d'un dispositif selon la revendication précédente, dans un moteur ayant deux soupapes d'admission par cylindre.

## Claims

1. Device for closing air intake ducts of a multi-cylinder internal combustion engine, the said device comprising a butterfly valve that is provided with a plurality of closing elements (1) as well as a sheath (4) that is provided on either side with lateral openings for the passage of air, and having a longitudinal recess in which the butterfly valve is inserted and can rotate about an axis of rotation, according to which the closing elements (1) include a plate, which has an operating surface that is substantially planar which, when the device is in the open position, is aligned with the bottom or top edge of a corresponding opening in the sheath and according to which the axis of rotation passes through the plate of at least one closing element.

2. Device according to claim 1, in which the plates of the closing elements are provided on the side opposite the operating surface with one or a plurality of ribs (6)

3. Device according to any one of the preceding claims, in which the longitudinal walls include a central rib (6) that is at right angles to the said walls, the said central rib being situated in a plane which encompasses the axis of rotation.

4. Device according to any one of the preceding claims, in which the sheath (4) is incorporated in an intake manifold.

5. Device according to any one of the preceding claims, in which the butterfly valve includes the circular section connecting elements (2) which interconnect the closing elements (1), the axis of symmetry of which coincides with the axis of rotation, the said closing elements being provided with recesses.

6. Device according to claim 5, in which at least one recess (7) is provided with a ring produced from material with a low friction coefficient.

7. Device according to any one of the preceding claims, in which the butterfly valve is produced from a single piece of plastics material.

8. Device according to any one of the preceding claims, in which the sheath includes an internal wall (10) against which the closing elements move into the closed position of the device.

9. Device according to claim 8, in which the butterfly valve is conical and its axis of rotation is disposed so as to obtain a constant play between the closing elements (1) and the wall (10) against which they abut in order to close the (parts of the) intake ducts.

10. Use of a device according to the preceding claim, in an engine with two intake valves per cylinder.

## Patentansprüche

1. Verschlussvorrichtung für Luftansaugleitungen eines Mehrzylinder-Verbrennungsmotors, die ein Schieberventil mit mehreren Verschlusselementen (1) sowie eine Büchse (4) mit seitlichen Öffnungen auf jeder Seite für den Luftdurchlass enthält und die eine längliche Aussparung hat, in die das Schieberventil eingesetzt und sich um eine Drehachse drehen kann, gemäß der die Verschlusselemente (1) eine Platte mit einer funktionellen und im Wesentlichen ebenen Oberfläche haben, die, wenn die Vorrichtung geöffnet ist, mit der unteren oder oberen Kante einer entsprechenden Öffnung der Büchse ausgerichtet ist und gemäß der die Drehachse durch die Platte mindestens eines Verschlusselementes verläuft.

2. Vorrichtung gemäß Anspruch 1, in welcher die Platten der Verschlusselemente auf der der funktionellen Oberfläche gegenüberliegenden Seite mit einer oder mehreren Rippen (6) versehen sind.

3. Vorrichtung gemäß einem der obigen Ansprüche, in welcher die Längswände eine zentrale Rippe (6) haben, die senkrecht zu diesen verläuft und die in einer Ebene sitzt, welche die Drehachse beinhaltet.

4. Vorrichtung gemäß einem der obigen Ansprüche, in welcher die Büchse (4) in einen Einlasskrümmer integriert ist.

5. Vorrichtung gemäß einem der obigen Ansprüche, in welcher das Schieberventil Verbindungselemente (2) mit rundem Querschnitt beinhaltet, welche die Verschlusselemente (1) untereinander verbinden, und deren Symmetrieachse sich mit der Drehachse deckt, und die mit Aussparungen versehen sind.

6. Vorrichtung gemäß Anspruch 5, in welcher mindestens eine Aussparung (7) mit einem Ring aus einem Material mit geringem Reibungskoeffizienten versehen ist.

7. Vorrichtung gemäß einem der obigen Ansprüche, in welcher das Schieberventil aus einem einzigen Teil aus Kunststoff besteht.

8. Vorrichtung gemäß einer der obigen Ansprüche, in welcher die Büchse eine Innenwand (10) beinhaltet, gegen welche sich die Verschlusselemente in geschlossenem Zustand der Vorrichtung ausrichten.

9. Vorrichtung gemäß Anspruch 8, in welcher das Schieberventil konisch gestaltet und seine Drehachse so angeordnet ist, dass ein ständiges Spiel zwischen den Verschlusselementen (1) und der Wand (10) entsteht, gegen die sie anstoßen, um die (Teile der) Ansaugleitungen zu verschließen.

10. Verwendung einer Vorrichtung gemäß dem vorhergehenden Anspruch, in welcher ein Motor mit zwei Ansaugventilen pro Zylinder ausgestattet ist.
